# EUROPEAN PATENT APPLICATION

(11) **EP 2 034 052 A1**
(43) Date of publication of application: **11.03.2009**
(21) Application number: 07115765.5
(22) Date of filing: 05.09.2007
(51) Int. Cl.: C23C 28/00, B05D 7/24

(54) **A method for treating a silica-coated substrate**

(71) Applicant: OCAS N.V. - Onderzoekscentrum voor Aanwending van Staal, 9060 Zelzate (BE)
(72) Inventor: Siau, Sam, 9052 Zwijnaarde (BE); Van den Berg, Otto, 9200 Grembergen (BE)
(74) Representative: pronovem

(57) **Abstract**

The present invention is related to a method for treating a silica-coated substrate, comprising the steps of :
- providing a substrate having a silica layer on its surface,
- modifying an accessible surface of said silica layer by bringing the substrate into contact with at least one silazane agent so as to obtain a covalently bound single molecular layer on said accessible surface.

Monofunctional or polyfunctional silazane agents can be used in the method. The invention is equally related to a substrate comprising a silica layer provided with a single molecular silane-modified layer.

## Description

### Field of the invention

The present invention is related to the treatment of substrates such as metal substrates, which have been provided with a silica layer on their surface. The substrate can for example be a cold rolled steel sheet, a steel sheet coated with a metallic or organic coating or a stainless steel substrate. The treatment is aimed at surface modifying certain characteristics of the substrate, for example in terms of corrosion or repellency to oil.

### State of the art

State of the art methods to modify silica layers include the use of silicon oil. As described for example in DD293340A5, layers of silicon oil (>50 nm) are applied in a layer on top of a silica layer, rendering the surface hydrophobic. Such layers show limited adhesion when thicknesses of less than 50 nm are used. Moreover, the method requires a thermal after-treatment. These solutions are therefore not favourable, especially in combination with the currently applied silica deposition techniques. Other solutions e.g. described in DE10355038A1, describe the use of silanes as the layer forming material. In the case of DE10310827, tri-functional silanes are used as the layer forming material, and applied on an intermediate layer of silica, applied for enhancing the attachment of the silane layer to the substrate. Using silanes as the layer forming materials limits the use to relative low-cost silanes, due to the large volumes needed. Having organic functionality in the silane network also influences the permeability of the protective layer, which, in some cases, influences the chemical resistance of the protective layer. Due to the chemical nature of tri-functional silanes, use of such silanes will never result in pure monomolecular layers on top of the silica layer. Moreover, the finally produced layers will be rich in residual silanol moieties, which is undesirable in the production of low-energy surfaces.

Traditionally, corrosion inhibitors for (galvanised) steel contain metals such as chromium or zinc, phosphorus in the form of phosphate, polyphosphate or phosphonate, or sodium nitrite. Most of these known corrosion inhibitors are now believed to have an adverse effect on the environment when they are discharged into waterways e.g. rivers, lakes. The known corrosion inhibitors can cause environmental damage due to their toxicity or to their tendency to promote biological growth. In other previous art, organic compounds of low molecular weight are used to inhibit the corrosion of (galvanised) steel, e.g. US5176850 describing the use of glycerol derivatives as corrosion inhibitors, or more recently the use of thioamides (DE102005061319A1) by BASF. Due to their low molecular weight, these solutions can potentially leach from a coating, which is undesirable.

### Aims of the invention

The present invention aims to provide a method of treating a substrate provided with a silica coating wherein the treatment enhances protection of the substrate against corrosion or provides other functionalities to such a substrate, without the aforementioned drawbacks.

### Summary of the invention

The present invention is related to a method and substrate as described in the appended claims.

### Detailed description of the invention

The method of the invention comprises the steps of:
- providing a substrate having a silica layer on its surface,
- modifying an accessible surface of said silica layer by bringing the substrate into contact with at least one silazane agent so as to obtain a covalently bound single molecular layer on said accessible silica surface.

The substrate may be a metal substrate which is defined as an uncoated alloy or metal substrate or any coated version thereof with the coating itself being of metallic, organic, inorganic or hybrid nature, or any mixture thereof. The substrate can be a flat surface in the form of a sheet, for example a metal sheet, or it can be a surface of any type of object. The accessible surface may be the outer surface of the silica layer and possibly also the inner surface of pores or pinholes present in the silica layer. In the context of the present invention, the term 'silica' is preferably referring to SiOₓ with x equal to two. However, within the scope of the present invention, 'silica' can equally refer to a wider range of x-values, situated between 1.5 and 2.5. Also, within the definition of 'silica layer' in the context of the invention, the silica layer may comprise small amounts of other elements such as hydrogen or carbon, for example present as small amounts of contaminants.

Said silazane agents can be linear or cyclic silazane agents. According to the preferred embodiment, said silazane agent(s) is (are) monofunctional silazane agents, which are defined as compounds having one characteristic reactive unit.

Said monofunctional silazane agent(s) may be (an) agent(s) selected from the group consisting of
- linear agents having the structure (R₃Si)₂NR', (R₂SiNR')ₓ or R₃SiNR'₂, and cyclic silazane agents comprising the aza-2,2,-dialkylsilacyclopentane (A) or aza-2,2,-dialkylsilacyclohexane (B) skeleton : 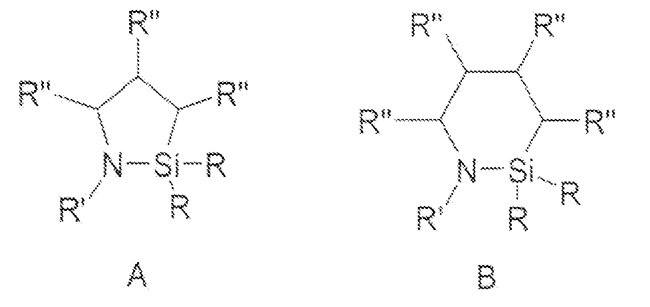 wherein - in said linear and said cyclic agents - R is selected from the group consisting of hydrogen, aliphatic hydrocarbon moieties of 1 to 20 inclusive carbon atoms, unsaturated olefin moieties of 2 to 20 inclusive carbon atoms including vinyl and allyl, halogenated alkyl moieties of 1 to 20 inclusive carbon atoms and phenyl moieties, and wherein R' is hydrogen or an alkyl moiety of 1 to 10 inclusive carbon atoms, wherein R" is selected from the group consisting of hydrogen, aliphatic hydrocarbon moieties of 1 to 20 inclusive carbon atoms, halogenated alkyl moieties of 1 to 20 inclusive carbon atoms and phenyl moieties, and wherein the value of x is between 3 and 100.

According to a second embodiment, said silazane agent(s) is (are) (a) linear poly-functional silazane agent(s). This is an agent having several characteristic reactive units. Preferably, said poly-functional agent is of the general formula: 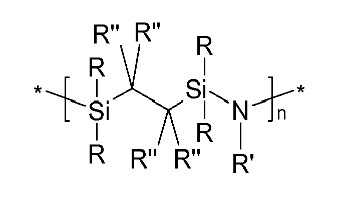 wherein R is selected from the group consisting of hydrogen, aliphatic hydrocarbon moieties of 1 to 20 inclusive carbon atoms, unsaturated olefin moieties of 2 to 20 inclusive carbon atoms including vinyl and allyl, halogenated alkyl moieties of 1 to 20 inclusive carbon atoms and phenyl moieties, and wherein R' is hydrogen or an alkyl moiety of 1 to 10 inclusive carbon atoms, and wherein R" is selected from the group consisting of hydrogen, aliphatic hydrocarbon moieties of 1 to 20 inclusive carbon atoms, halogenated alkyl moieties of 1 to 20 inclusive carbon atoms and phenyl moieties. In the above formula, n is preferably between 2 and 1000.

The invention is equally related to a polyfunctional silazane agent of the above formula.

The deposition technique for silica may be a Physical Vapour Deposition technique (PVD) or a Chemical Vapour Deposition technique (CVD) or a solgel process, without being limited to these techniques. One of several CVD processes may be used, such as Combustion-CVD (CCVD), Thermal CVD (TCVD), Plasma-assisted CVD (PACVD), Flame-Hydrolysis Deposition (FHD) or Flame Assisted CVD (FACVD). In these processes, a pre-cursor comprising silicon, preferably an organic precursor, such as tetra-ethoxy-ethane (TEOS), tetramethylsilane (TMS), hexamethyldisiloxan (HMDSO) is converted into a silicon oxide layer containing free silanol moieties. These moieties give the silicon oxide layer a hydrophilic character. The use of Flame Assisted Chemical Vapour Deposition (FACVD) possibly includes the step of pre-heating the substrate to a temperature of no more than 250°C. FACVD is a variant of CVD that involves the chemical reaction/combustion of gaseous, liquid or solid precursors in diffused or premixed flames. The thickness of the silicon oxide layer is preferably between 10nm and 100nm.

The modification of the accessible silica surface takes place by a reaction between free silanol groups present on the accessible silica surface, and the silazane agents, to form a silane-modified surface, having sufficient mechanical and chemical stability. The silane-modified surface is formed by a covalently bound single molecular layer.

The contacting of the substrate with the silazane agent(s) preferably takes place during a time span of between 1 and 10000 seconds at a temperature between 10 and 180°C.

The silazane agent(s) may be provided in liquid or gaseous form. In liquid form, the silazane agent(s) may be provided in pure liquid form or in a solution combined with an inert solvent. The inert solvent may be toluene, xylene or mineral oil. In the solution, the solvent may be provided in a volume ratio ranging from 1:1 to 99:1 with respect to the one or more silazane agents (ratio expressed as solvent:silazanes). The solution or liquid silazane may be applied by submerging the substrate in the liquid or solution, or by applying the liquid or solution by spraying, brushing or otherwise.

Alternatively, the reaction may be performed in the gas phase by providing the silazane agent(s) in pure gaseous form, or by providing a gas mixture at a partial pressure of the silazane agent(s) between 0.01 mbar and 300mbar and preferably 100mbar. When performed in the gas phase, the reaction may be performed under atmospheric pressure or higher, using nitrogen, argon or any other type of inert gas as a carrier gas for the vapour of the silazane agent(s) cited above.

After the reaction has taken place, the excess reagent is preferably removed with solvent, pressurized air, or by heating, either by exposure to hot air or infrared radiation or a combination thereof. The method of the invention may also include a step of recycling or otherwise recuperating the reagents. When the polyfunctional silazane agent is used as defined above, a single covalently bound molecular layer is obtained after the step of removing excess reagent.

The application of a covalently bound single molecular layer has the advantages of low material consumption and therefore low cost. In addition the surface is well-defined and is low in residual surface silanol moieties, which is favourable for creating low-energy surfaces. The versatility of the method lies in the wide range of available silazanes, the tailoring of the surface energy by the choice of R, and in further modification and/or reaction with additional coatings in order to achieve better adhesion properties when compared to untreated surfaces.

The use of silazanes for surface modification of silica layers and silica coated substrates solves the following issues connected to the current state of the art:
- Multilayer formation
   o Cost for large volumes of silane
   o Formation of undesired silanol moieties
- Leaching of modifier (for non-covalent modification, e.g. PDMS (polydimethylsiloxane))

Experiments on the modified silica surfaces have shown that the surfaces are resistant to rubbing with ketones, chlorinated solvents, alcohols and dilute acids. The modified layers have thus proved to be mechanically and chemically robust. None of the existing methods to modify siliceous surfaces, and in particular those surfaces covering metallic substrates, combine the properties exhibited by the current invention.

By the appropriate choice of the silazane agent (s) used in the method of the invention, one or a combination of the following properties can be given to a silica-coated metal substrate :
- anti-stick
- enhanced corrosion resistance,
- enhanced coating adhesion
- enhanced repellency to oil, organic or inorganic pigments, dyes and compositions containing such agents,
- repellency to water and aqueous solutions,
- complexation abilities for various types of ions
- hydrophilic properties

Some examples of silazane agents that can be used in the method of the invention
- Hexamethyldisilazane (HMDZ) : 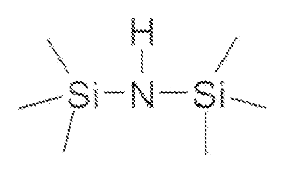 which leads to high contact angle inert surfaces
- 1,3-Bis(3,3,3-trifluoropropyl)tetramethyldisilazane : 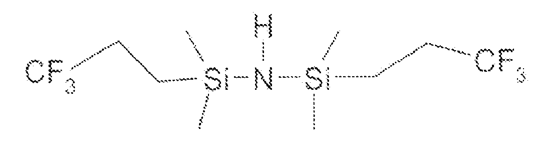 which gives PTFE-like surfaces, (PTFE meaning polytetrafluoroethylene)
- 1,3-divinyltetramethyldisilazane : 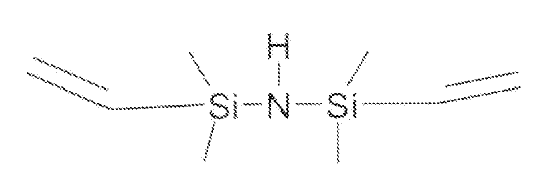 which synthesizes vinyl groups on the surface, which allows to add versatile chemistry,
- N-Aminoethyl-aza-2,2,4-trimethylsilacyclopentane : 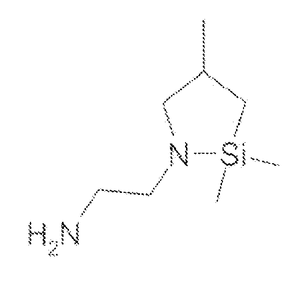 which is a very reactive agent, able to create more polar surfaces.

The enhanced corrosion resistance obtained by the silane modifying surface treatment has been verified by means of Salt-Spray Testing (SST). The standard practice for operating the salt spray apparatus was applied according to the ASTM B 117-07 standard. The evaluation of the corrosion was performed using the EN ISO 4628-1 norm for designating the quantity and size of defects and the intensity of changes in appearance of coatings. In this norm a uniform convention has been adopted for designating the quantity and size of defects (white rust) and the intensity of changes by means of a numerical scale ranging from 0 to 5. 0 denoting no defects or changes and 5 denoting defects or changes so severe that further discrimination is not reasonable. The results of the SST test on the hexamethyldisilazane surface-treated silica-covered substrates, compared to the untreated-silica covered substrates are listed in table 1. The samples are Hot Dip Galvanized (HDG) samples consisting of steel covered by a Zn layer, which is then coated with silica.

**Table 1: Overview of the SST test results on the reference silica-coated HDG samples and the Hexamethyldisilazane (hmdz) treated-silica covered HDG samples performed according to EN ISO 4628-1 standard**

| | 1 day | 2 days | 3 days | 4 days | 5 days |
|---|---|---|---|---|---|
| HDG-silica coated reference 1 | 1 | 2 | 3 | 4 | 4.5 |
| HDG-silica coated reference 2 | 2 | 2.5 | 3.5 | 4 | 5 |
| HDG HMDZ treated silica layer 1 | 0.5 | 1 | 2 | 2.5 | 3.5 |
| HDG HMDZ treated silica layer 2 | 1 | 1.5 | 2 | 2.5 | 3 |

As can be seen from table 1, the surface treatment of the silica with HMDZ resulted in significant improvement of the corrosion protection.

The invention is equally related to a substrate obtained by the method of the invention. Such a substrate is characterized in that it comprises:
- a base substrate,
- on a surface of said base substrate, a silica layer,
- at least on the outer surface of said silica layer, a covalently bound single molecular layer. If the silica layer is porous, a further covalently bound single molecular layer may equally be present in pores of said silica layer.

## Claims

1. A method for treating a silica-coated substrate, comprising the steps of :
- providing a substrate having a silica layer on its surface,
- modifying an accessible surface of said silica layer by bringing the substrate into contact with at least one silazane agent so as to obtain a covalently bound single molecular layer on said accessible surface.

2. The method according to claim 1, wherein said substrate is a metal substrate.

3. The method according to claim 1 or 2, wherein said at least one silazane agent is a monofunctional silazane agent.

4. The method according to any one of claims 1 to 3, wherein said at least one silazane agent is selected from the group consisting of :
- linear agents having the structure (R₃Si)₂NR', (R₂SiNR')ₓ or R₃SiNR'₂, and cyclic silazane agents comprising the aza-2,2,-dialkylsilacyclopentane (A) or aza-2,2,-dialkylsilacyclohexane (B) skeleton : 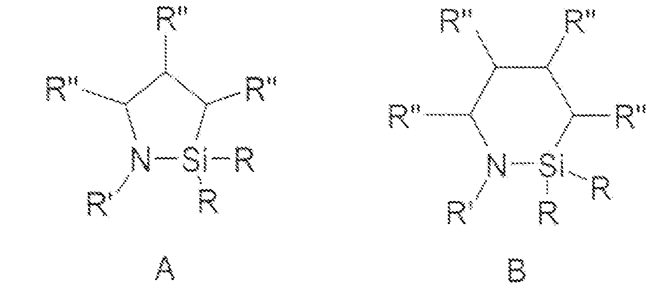 wherein - in said linear and said cyclic agents - R is selected from the group consisting of hydrogen, aliphatic hydrocarbon moieties of 1 to 20 inclusive carbon atoms, unsaturated olefin moieties of 2 to 20 inclusive carbon atoms including vinyl and allyl, halogenated alkyl moieties of 1 to 20 inclusive carbon atoms and phenyl moieties, and wherein R' is hydrogen or an alkyl moiety of 1 to 10 inclusive carbon atoms, and wherein R" is selected from the group consisting of hydrogen, aliphatic hydrocarbon moieties of 1 to 20 inclusive carbon atoms, halogenated alkyl moieties of 1 to 20 inclusive carbon atoms and phenyl moieties, and wherein the value of x is between 3 and 100.

5. The method according to any one of claims 1 to 3, wherein said at least one silazane agent is a polyfunctional silazane agent.

6. The method according to claim 5, wherein said at least one silazane agent is a linear poly-functional silazane agent of the general formula : 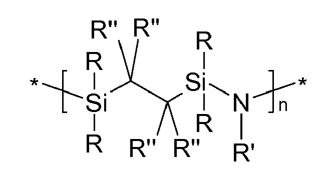 wherein R is selected from the group consisting of hydrogen, aliphatic hydrocarbon moieties of 1 to 20 inclusive carbon atoms, unsaturated olefin moieties of 2 to 20 inclusive carbon atoms including vinyl and allyl, halogenated alkyl moieties of 1 to 20 inclusive carbon atoms and phenyl moieties, and wherein R' is hydrogen or an alkyl moiety of 1 to 10 inclusive carbon atoms, and wherein R" is selected from the group consisting of hydrogen, aliphatic hydrocarbon moieties of 1 to 20 inclusive carbon atoms, halogenated alkyl moieties of 1 to 20 inclusive carbon atoms and phenyl moieties.

7. The method according to any one of the preceding claims, wherein said contacting of the substrate with the silazane agent(s) takes place during a time span of between 1 and 10000 seconds at a temperature between 10 and 180°C.

8. The method according to any one of the preceding claims, wherein said at least one silazane agent is applied in pure liquid form, or in a liquid solution in combination with an inert solvent.

9. The method according to claim 8, wherein said inert solvent is toluene, xylene or mineral oil.

10. The method according to any one of claims 1 to 7, wherein said at least one silazane agent is applied in pure gaseous form or in a gas mixture, at a partial pressure of the silazane agent(s) between between 0.01 mbar and 300mbar.

11. The method according to claim 10, wherein said partial pressure is 100mbar.

12. The method according to any one of the preceding claims, wherein said silica layer has been applied by a Chemical Vapour Deposition (CVD) technique, or by a Physical Vapour Deposition (PVD) technique, or by a solgel process.

13. The method according to claim 12, wherein said silica layer has been applied by Flame Assisted Chemical Vapour Deposition (FACVD).

14. A substrate comprising a silica layer on its surface, and further comprising at least on the outer surface of said silica layer a covalently bound single molecular layer.

15. The substrate according to claim 14, wherein said silica layer is a porous layer, and wherein said substrate further comprises a covalently bound single molecular layer on the inner surface of pores of said silica layers.
